# EUROPEAN PATENT APPLICATION

(11) **EP 2 407 381 A2**
(43) Date of publication of application: **18.01.2012**
(21) Application number: 11173801.9
(22) Date of filing: 13.07.2011
(51) Int. Cl.: B64D 41/00, H02J 4/00

(54) **Enhanced energy redistribution by means of an electrical distribution unit**

(30) Priority: 13.07.2010 US 835169
(71) Applicant: Hamilton Sundstrand Corporation, Windsor Locks, CT 06096-1010 (US)
(72) Inventor: Shepard, Charles, Dekalb, IL Illinois 60115 (US); Andres, Michael, Roscoe, IL Illinois 61073 (US)
(74) Representative: Tomlinson, Kerry John

(57) **Abstract**

An electrical distribution unit (EDU) (101) of an aircraft includes power control circuitry (114) disposed to communicate with a power source (115), a regenerative load control circuit (108, 109, 110) in communication with the power control circuitry and disposed to communicate with a regenerative load (102, 103, 104), and a passive load control circuit (111, 112, 113) in communication with the power control circuitry and the regenerative load control circuit, the passive load control circuit disposed to communicate with a passive load (105, 106, 107). The regenerative load control circuit and the passive load control circuit are disposed to arrange a conductive path between the regenerative load and the passive load in response to operation of the regenerative load.

## Description

### FIELD OF INVENTION

The subject matter disclosed herein relates generally to the field of electronic distribution units (EDU), and more particularly to enhanced EDU energy redistribution.

### DESCRIPTION OF RELATED ART

Electronic distribution units (EDU) in combination with electro-mechanical control devices are used for electronic control applications in, for example, the aerospace industry, as an alternative to traditional hydraulic controls. An EDU may distribute power to various electro-mechanical devices to provide control of an aircraft. In comparison to traditional hydraulic control systems, electronic control applications may simplify maintenance of aircraft and introduce relatively increased reliability.

### BRIEF SUMMARY

According to one aspect of the invention, an enhanced electrical distribution unit (EDU) of an aircraft includes power control circuitry disposed to communicate with a power source, a regenerative load control circuit in communication with the power control circuitry and disposed to communicate with a regenerative load, and a passive load control circuit in communication with the power control circuitry and the regenerative load control circuit, the passive load control circuit disposed to communicate with a passive load. The regenerative load control circuit and the passive load control circuit are disposed to arrange a conductive path between the regenerative load and the passive load in response to operation of the regenerative load.

According to another aspect of the invention, a method of operating an enhanced electrical distribution unit (EDU) of an aircraft includes de-energizing a regenerative load, arranging a conductive path from the regenerative load to a passive load in response to the de-energizing, dissipating regenerative energy originating at the regenerative load in the passive load, and severing the conductive path in response to the dissipating.

According to another aspect of the invention, an aircraft control system includes at least one control surface, an electro-mechanical device arranged to operate the control surface, an anti-icing element in communication with the control surface or the electro-mechanical device, and an enhanced electrical distribution unit in communication with the electro-mechanical device and the anti-icing element. The enhanced electrical distribution unit is disposed to redirect regenerative energy generated at the electro-mechanical device to the anti-icing element.

Other aspects, features, and techniques of the invention will become more apparent from the following description taken in conjunction with the drawings.

### BRIEF DESCRIPTION OF THE SEVERAL VIEWS OF THE DRAWINGS

Referring now to the drawings wherein like elements are numbered alike in the several FIGURES:

FIG. 1 illustrates an embodiment of an EDU with enhanced energy redistribution;

FIG. 2 illustrates an embodiment of a method of operating an EDU with enhanced energy redistribution; and

FIG. 3 illustrates an embodiment of a control surface.

### DETAILED DESCRIPTION

Embodiments of an electronic distribution unit (EDU), and a method of operating an EDU with enhanced energy redistribution, are provided, with example embodiments being discussed below in detail.

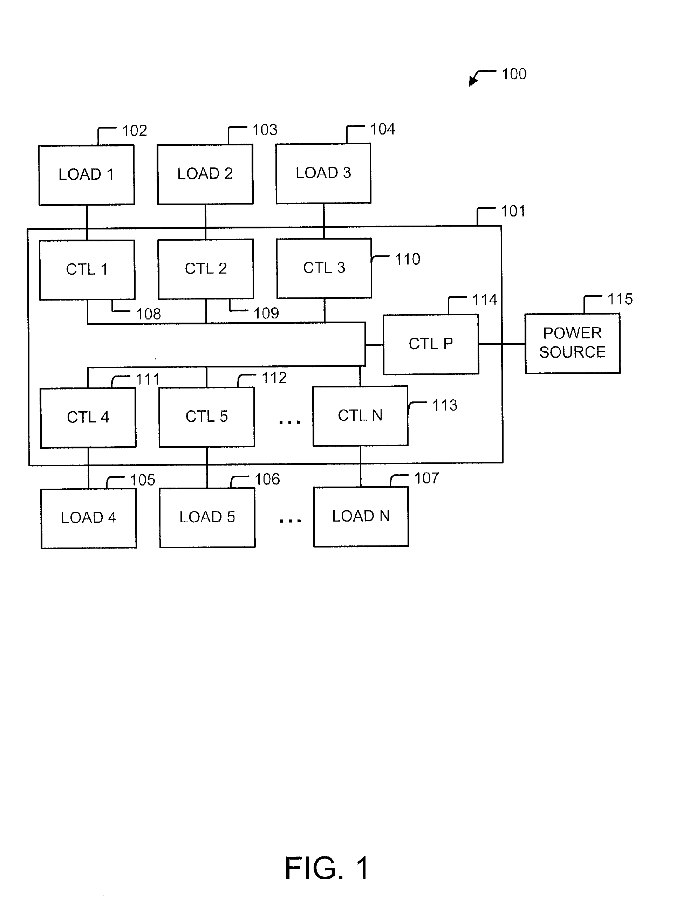

Turning to FIG. 1, an embodiment of an EDU with enhanced energy redistribution is illustrated. The EDU 101 may be included in an aircraft control system 100. Although not illustrated, it should be understood that the control system 100 may include a plurality of other control elements. Detailed description of these control elements is omitted herein for the sake of brevity.

The EDU 101 may be interfaced with a plurality of loads 102-107. Each load of the plurality of loads 102-107 may be embodied as electro-mechanical devices or any other suitable device, including passive devices such as anti-icing devices, heating devices, or any other suitable devices. For example, according to at least one example embodiment, loads 102, 103, and 104 may be regenerative devices such as actuators. The actuators are electro-mechanical devices configured and disposed to operate control surfaces of an aircraft. Electric power is required to displace the control surface from the aerodynamic neutral position. When the control surface returns to the neutral or lower energy position, regenerative electric power is returned and must be dissipated.

The loads 102, 103, and 104 may be in communication with control circuitry 108, 109, and 110, respectively. Furthermore, control circuitry 108, 109, and 110 may be in communication with power control circuitry 114, which is further in communication with a power source 115, such as a generator, a battery or a turbine. Thus, the EDU 101 may distribute power to each of the loads 102, 103, and 104 through power control circuitry 114 and control circuitry 108, 109, and 110.

The loads 105, 106, and 107 may be embodied as any combination of regenerative or passive devices including heaters, anti-icing elements, pumps, fans, or any suitable loads. The loads 105, 106, and 107 may be in communication with control circuitry 111, 112, and 113, respectively. Furthermore, control circuitry 111, 112, and 113 may be in communication with power control circuitry 114, which is in further communication with the power source 115. Thus, the EDU 101 may distribute power to each of the loads 105, 106, and 107 through power control circuitry 114 and control circuitry 111, 112, and 113. In FIG. 1, the control circuitry 108-110 is an example of regenerative load control circuitry, and the control circuitry 111-113 is an example of passive load control circuitry.

According to example embodiments, actuation of loads 102, 103, and 104 may include directing energy from the power source 115 to respective control circuitry 108, 109, and 110. As any of the loads 102, 103, and 104 is deactivated or de-energized, a pulse of regenerative energy may be produced at the loads.

For example, load 102 may be actuated to operate a control surface of an aircraft. During operation, the control surface may be actuated to move from a plurality of positions which bring the load 102 to various states of actuation. In a simple example, the load 102 may be fully extended or allowed to return to a neutral position. As the load 102 is brought to a neutral position, a pulse of regenerative energy is produced. This pulse may be transmitted to the control circuitry 108, the power control circuitry 114, and the power source 115. It can be appreciated that the regenerative energy may then be absorbed at the power source 115 producing undesirable voltage spikes, heating and/or stress. However, according to example embodiments, the EDU 101 may redistribute the regenerative energy to reduce these effects.

For example, a conductive path may be arranged through a combination of control circuitry 108, and any combination of control circuitry 111, 112, 113, and 114. The conductive path may be arranged such that the regenerative energy produced at load 102 is redirected to a passive load, such as an anti-icing load (e.g., load 105) or a heating load such as a fuel pre-heater. For example, an anti-icing load may include an anti-icing element in communication with an aerodynamic surface of an aircraft. In this scenario, the regenerative energy is absorbed at the load 105 reducing stress at the power source 115 and increasing the efficiency of operation of the anti-icing element through utilization of otherwise wasted regenerative energy. Upon redistribution of the regenerative energy, the conductive path may be severed.

It is noted that a conductive path may further be arranged throughout the EDU 101 for redistribution from any of the loads 102, 103, and 104 to any of the loads 105, 106, and 107. It is further noted that although the EDU 101 is illustrated and described as including electro-mechanical loads at 102, 103, and 104, a plurality of additional electro-mechanical loads may be included according to any desired implementation.

Therefore, according to example embodiments, an EDU with enhanced energy distribution is provided which may redistribute regenerative energy from regenerative or inductive loads such as electro-mechanical devices to a plurality of other loads in communication with the EDU.

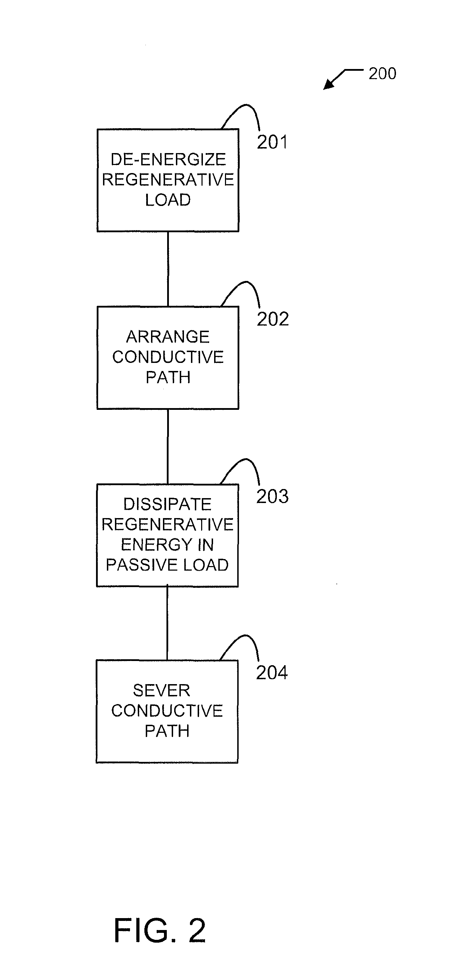

Hereinafter, description of a method of operating an EDU with enhanced energy distribution is provided with reference to FIG. 2.

According to FIG. 2, the method 200 includes de-energizing a regenerative load at block 201. The regenerative load may be any electro-mechanical load as described above with reference to FIG. 1, and the method 200 can be implemented by EDU 101 of FIG. 1. For example, the regenerative load may be an actuator configured and disposed to operate a control surface of an aircraft. As the regenerative load is de-energized, a pulse of regenerative energy may be produced.

In response to de-energizing the regenerative load, the method 200 includes arranging a conductive path at block 202. The conductive path may be arranged to distribute the regenerative energy described at block 201 to a passive load.

In response to arranging the conductive path, the regenerative energy may be dissipated at the passive load at block 203. The passive load may be a resistive load such as, for example, an anti-icing system or heating system such as a fuel pre-heating system of an aircraft.

In response to dissipating the regenerative energy, the conductive path is severed at block 204.

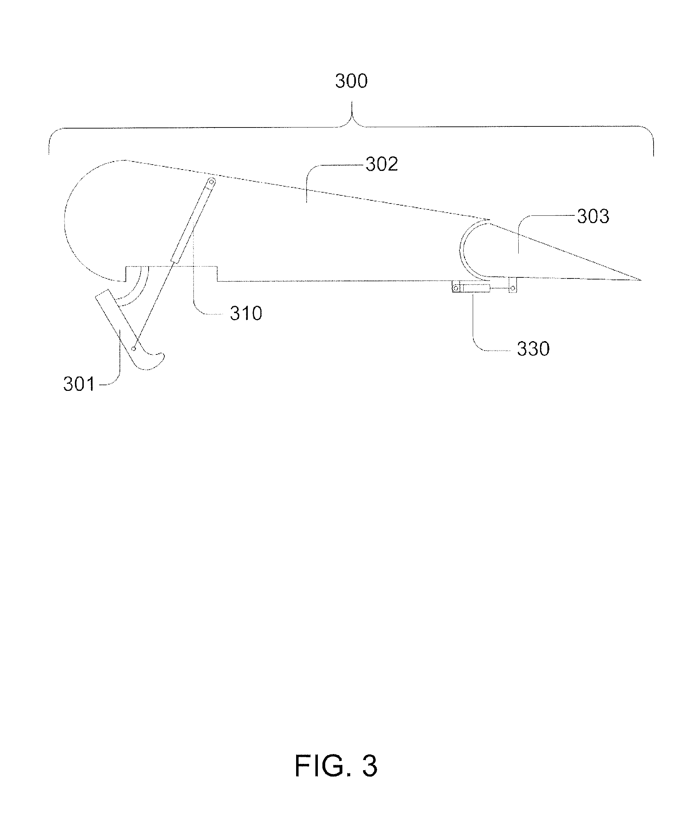

For example, the regenerative loads may be electro-mechanical devices in communication with aircraft control surfaces. FIG. 3 illustrates example aircraft control surfaces on an airfoil 300.

The airfoil 300 may include a main body 302 including aircraft control surfaces 301 and 303. The airfoil 300 may further include electro-mechanical device 310 in mechanical communication with the control surface 301. The airfoil 300 may further include electro-mechanical device 330 in communication with control surface 303. Furthermore, the control surfaces 301 and 303, and the main body 302 may include anti-icing elements in communication with the control surfaces or electro-mechanical devices, or other passive loads.

Although a particular airfoil is illustrated, it should be noted that example embodiments are not so limited. Example embodiments may be implemented on any suitable airfoil, or on any suitable aircraft.

Therefore, as described in method 200, the electro-mechanical devices 310 and 330 may produce regenerative energy which is redirected to said passive loads for dissipation.

As described above, according to example embodiments, a method of operating an EDU with enhanced energy distribution is provided which may redistribute regenerative energy from regenerative loads such as electro-mechanical devices (for example in communication with control surfaces) to a plurality of other loads in communication with the EDU, including passive loads such as anti-icing systems or heating systems of an aircraft.

The technical effects and benefits of example embodiments include relatively decreased waste energy through redistribution of energy provided through typical operation of electro-mechanical devices on an aircraft. A further benefit is a reduction in waste thermal energy to be transported and rejected to a heat sink. Redirecting and/or redistributing energy generated at electro-mechanical control devices to other systems may also reduce the amount of energy required by these other systems from a power source. Therefore, the overall efficiency of an aircraft may be increased. A further benefit is improved control of the voltage levels for all connected supplies and loads.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangements not hereto described will be apparent to those of ordinary skill in the art without departing from the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An enhanced electrical distribution unit (EDU) of an aircraft, comprising:
power control circuitry disposed to communicate with a power source;
a regenerative load control circuit in communication with the power control circuitry and disposed to communicate with a regenerative load; and
a passive load control circuit in communication with the power control circuitry and the regenerative load control circuit, the passive load control circuit disposed to communicate with a passive load;
wherein, the regenerative load control circuit and the passive load control circuit are disposed to arrange a conductive path between the regenerative load and the passive load in response to regenerative operation of the regenerative load.

2. The electrical distribution unit of claim 1, wherein the power source is a generator, a battery, or a turbine.

3. The electrical distribution unit of claim 1 or 2, wherein the regenerative load is an electro-mechanical device disposed to operate a control surface of the aircraft.

4. The electrical distribution unit of claim 1, 2 or 3, wherein the regenerative load is disposed to generate a pulse of regenerative energy in response to being directed to a neutral or lower energy state of operation.

5. The electrical distribution unit of claim 4, wherein the pulse of regenerative energy is communicated from the regenerative load to the passive load over the conductive path.

6. The electrical distribution unit of any preceding claim, wherein the passive load is a resistive heating element or an element of an anti-icing system of the aircraft.

7. The electrical distribution unit of any preceding claim, wherein regenerative energy generated at the regenerative load is dissipated at the passive load in response to the arrangement of the conductive path.

8. A method of operating an electrical distribution unit (EDU) of an aircraft, comprising:
de-energizing a regenerative load;
arranging a conductive path from the regenerative load to a passive load in response to the de-energizing;
dissipating regenerative energy originating at the regenerative load in the passive load; and
severing the conductive path in response to the dissipating.

9. The method of claim 8, wherein the regenerative load is an electro-mechanical device disposed to operate a control surface of the aircraft.

10. The method of claim 9, wherein de-energizing the regenerative load includes directing the electro-mechanical device to return the control surface to a neutral position, and wherein the regenerative energy is generated in response to the electro-mechanical device returning the control surface to the neutral position.

11. The method of claim 8, 9 or 10, wherein arranging the conductive path includes directing a regenerative load control circuit in communication with the regenerative load and a passive load control circuit in communication with the passive load to arrange the conductive path.

12. The method of claim 8, 9, 10 or 11, wherein severing the conductive path includes directing a regenerative load control circuit in communication with the regenerative load and a passive load control circuit in communication with the passive load to sever the conductive path.

13. An aircraft control system, comprising:
at least one control surface;
an electro-mechanical device arranged to operate the control surface;
an anti-icing element in communication with the control surface or the electro-mechanical device; and
an electrical distribution unit as claimed in any of claims 1 to 7 in communication with the electro-mechanical device as the regenerative load and the anti-icing element as the passive load, the electrical distribution unit being disposed to redirect regenerative energy generated at the electro-mechanical device to the anti-icing element.

14. The aircraft control system of claim 13, wherein the electro-mechanical device generates the regenerative energy in response to operation of the control surface; preferably wherein the electro-mechanical device generates the regenerative energy as a pulse in response to returning the control surface to a neutral position.

15. The aircraft control system of claim 13 or 14, wherein the regenerative energy is dissipated at the anti-icing element.
